# EUROPEAN PATENT APPLICATION

(11) **EP 3 705 519 A1**
(43) Date of publication of application: **09.09.2020**
(21) Application number: 18873603.7
(22) Date of filing: 02.08.2018
(51) Int. Cl.: C08L 21/00, B60C 1/00, C08K 3/36, C08K 5/098, C08K 5/34, C08K 5/3445, C08K 5/3472, C08K 5/47

(54) **RUBBER COMPOSITION, METAL/RUBBER COMPOSITE, AND TIRE**

(30) Priority: 31.10.2017 JP 2017211086
(71) Applicant: Bridgestone Corporation, Tokyo 104-8340 (JP)
(72) Inventor: OZAKI, Takuya, Tokyo 104-8340 (JP)
(74) Representative: Oxley, Robin John George
(86) International application number: PCT/JP2018/029120
(87) International publication number: WO 2019/087499

(57) **Abstract**

An object of the present disclosure is to provide a rubber composition possessing both satisfactory low exothermic property and satisfactory durability in adhesion to metal, crack resistance, and the like in a compatible manner. Specifically, a rubber composition comprises: a rubber component; N-cyclohexyl-2-benzothiazolylsulfenamide; a nitrogenous cyclic compound having no benzene ring; a cobalt compound containing no boron; and silica, wherein a content of the nitrogenous cyclic compound is 0.4 parts by mass or less with respect to 100 parts by mass of the rubber component, and a mass ratio (Co/N) of the cobalt content (Co) in the cobalt compound with respect to the nitrogen content (N) in the nitrogenous cyclic compound is in the range of 1.2 to 7.0.

## Description

### TECHNICAL FIELD

The present invention relates to a rubber composition, a metal-rubber composite, and a tire.

### BACKGROUND ART

A metal-rubber composite, obtained by embedding a metal material in rubber, is conventionally used for a rubber article such as a tire, a conveyer belt, a rubber crawler, and the like in order to reinforce the rubber and improve durability of the rubber article.
For example, a metal-rubber composite made of metal cords and rubber coated thereon is often provided as a belt in a tire on the outer side, in the tire radial direction, of a crown portion of a carcass thereof in order to improve durability of the tire. Belt-coating rubber for coating the metal therewith, of the belt of the tire described above, is one of the important rubber members which possibly affect safety of the tire, whereby the belt-coating rubber needs to be excellent in adhesion to metal and durability such as crack resistance.
Adhesion to metal is generally improved, in this regard, in a metal-rubber composite by changing type and/or a content of a vulcanization accelerator applied to rubber for coating metal, of the metal-rubber composite (PTL 1). A technique of adding a benzothiazole-based antirust agent to rubber for coating metal of a metal-rubber composite is also known as a technique of improving adhesiveness of the rubber to the metal (PTL 2).

Further, there has been a growing demand for lower fuel consumption rates in automobiles in connection with the worldwide movement of restricting carbon dioxide emission, triggered by an increasing interest in the environmental issues in recent years. To meet such a demand, rolling resistance in particular among tire performances must be reduced and reduction of rolling resistance can be achieved in general by applying a low exothermic rubber composition to a tire. Accordingly, satisfactory "low exothermic property", as well as satisfactory adhesion to metal and satisfactory durability in crack resistance and the like described above, is important as performance essentially required in belt-coating rubber of a tire.

### CITATION LIST

### Patent Literature

PTL 1: JP 2011-184665 Laid-Open
PTL 2: JP 2011-241391 Laid-Open

### SUMMARY

However, neither PTL 1 nor PTL 2 mentions to the low exothermic property of the rubber member itself. Therefore, they hardly provide techniques which safely achieve both satisfactory adhesion to metal and satisfactory low exothermic property of the rubber member in a compatible manner.
Although it is possible to obtain a low exothermic rubber composition by changing type and/or a content of carbon black generally added as a filler to a rubber composition, durability such as crack resistance of a rubber composition tends to deteriorate when the rubber composition is made low exothermic by changing type and/or a content of carbon black therein.
Accordingly, it is difficult to achieve both satisfactory low exothermic property and satisfactory durability in adhesion to metal, crack resistance, and the like of a rubber composition in a compatible manner by the conventional techniques.

In view of this, an object of the present disclosure is to solve the aforementioned problems of the prior art and provide a rubber composition possessing both satisfactory low exothermic property and satisfactory durability in adhesion to metal, crack resistance, and the like in a compatible manner.
Another object of the present disclosure is to provide a metal-rubber composite and a tire, each of which possesses satisfactory durability as described above and satisfactory low exothermic property in a compatible manner.

Primary features of the present disclosure, for achieving the aforementioned objects, are as follows.

A rubber composition contains: a rubber component; N-cyclohexyl-2-benzothiazolylsulfenamide; a nitrogenous cyclic compound having no benzene ring; a cobalt compound containing no boron; and silica, wherein a content of the nitrogenous cyclic compound is 0.4 parts by mass or less with respect to 100 parts by mass of the rubber component, and a mass ratio (Co/N) of the cobalt content (Co) in the cobalt compound with respect to the nitrogen content (N) in the nitrogenous cyclic compound is in the range of 1.2 to 7.0.
The rubber composition of the present disclosure, having the aforementioned features, can possess satisfactory low exothermic property and satisfactory durability in adhesion to metal, crack resistance and the like in a compatible manner.

In a preferred example of the rubber composition of the present disclosure, the nitrogenous cyclic compound is selected from the group consisting of triazole, a triazole derivative, imidazole, and an imidazole derivative. It is possible to improve adhesion of the rubber composition to metal, while reducing production cost of the rubber composition, in this case.

In this regard, each of the triazole derivative and the imidazole derivative preferably has a C₁₋₃ alkyl, a C₁₋₃ aminoalkyl, or an amino group in a side chain thereof. Adhesion of the rubber composition to metal is further improved in this case.

In another preferred example of the rubber composition of the present disclosure, the nitrogenous cyclic compound is selected from the group consisting of 1,2,3-triazole, 1,2,4-triazole, 3-amino-1,2,4-triazole, 4-amino-1,2,4-triazole, and imidazole. Adhesion of the rubber composition to metal is further improved in this case.

In another preferred example of the rubber composition of the present disclosure, the cobalt compound is cobalt (II) stearate. It is possible to achieve good overall balance between satisfactory low exothermic property and satisfactory durability in adhesion to metal, crack resistance and the like of the rubber composition in this case.

It is preferable that the rubber composition of the present disclosure contains no N,N-dicyclohexyl-2-benzothiazolylsulfenamide in terms of reducing an environmental burden.

A metal-rubber composite of the present disclosure is characterized in that it has the aforementioned rubber composition and a metal. The metal-rubber composite of the present disclosure can possess satisfactory durability as described above and satisfactory low exothermic property in a compatible manner.

A tire of the present disclosure is characterized in that it uses the aforementioned metal-rubber composite. The tire of the present disclosure can possess satisfactory durability as described above and satisfactory low exothermic property in a compatible manner.

According to the present disclosure, it is possible to provide a rubber composition possessing both satisfactory low exothermic property and satisfactory durability in adhesion to metal, crack resistance, and the like in a compatible manner. Further, according to the present disclosure, it is possible to provide a metal-rubber composite and a tire, each of which possesses satisfactory durability as described above and satisfactory low exothermic property in a compatible manner.

### DETAILED DESCRIPTION

Hereinafter, a rubber composition, a metal-rubber composite, and a tire of the present disclosure will be demonstratively described in detail by embodiments thereof.

### < Rubber composition >

A rubber composition of the present disclosure contains: a rubber component; N-cyclohexyl-2-benzothiazolylsulfenamide; a nitrogenous cyclic compound having no benzene ring; a cobalt compound containing no boron; and silica, wherein a content of the nitrogenous cyclic compound is 0.4 parts by mass or less with respect to 100 parts by mass of the rubber component, and a mass ratio (Co/N) of the cobalt content (Co) in the cobalt compound with respect to the nitrogen content (N) in the nitrogenous cyclic compound is in the range of 1.2 to 7.0.

N-cyclohexyl-2-benzothiazolylsulfenamide, which is often referred to as "vulcanization accelerator CZ" or "Vulcanization accelerator CBS", causes an effect of facilitating a vulcanizing reaction in the rubber composition of the present disclosure (N-cyclohexyl-2-benzothiazolylsulfenamide will occasionally be referred to as "vulcanization accelerator CZ" hereinafter). In general, a rubber composition having the vulcanization accelerator CZ blended therein tends to exhibit deteriorated adhesion to metal (deteriorated adhesion to metal after being allowed to stand for a long period of time and thus aged, in particular) and deteriorated crack resistance.
However, in the present disclosure, it is possible to suppress such deterioration in adhesion of the rubber composition to metal as described above by blending a nitrogenous cyclic compound having no benzene ring and a cobalt compound containing no boron with the vulcanization accelerator CZ.
Further, in the present disclosure, it is also possible to suppress the deterioration in crack resistance of the rubber composition described above by blending the nitrogenous cyclic compound having no benzene ring, the cobalt compound containing no boron, and silica with the vulcanization accelerator CZ.
Yet further, in the present disclosure, it is also possible to improve the low exothermic property of the rubber composition by adding the vulcanization accelerator CZ and silica thereto.
Accordingly, the rubber composition of the present disclosure can possess satisfactory low exothermic property and satisfactory durability in adhesion to metal, crack resistance and the like in a compatible manner.

The rubber composition of the present disclosure contains a rubber component. Examples of the rubber component include diene-based rubbers such as natural rubber (NR), polybutadiene rubber (BR), polyisoprene rubber (IR), styrenebutadiene copolymer rubber (SBR), acrylonitrile-butadiene copolymer rubber (NBR), ethylene-propylene copolymer rubber, ethylene-propylene-diene terpolymer rubber, butyl rubber (isobutylene-isoprene copolymer rubber (IIR)), halogenated butyl rubber, alkylated chlorosulfonated polyethylene rubber, polychloroprene rubber (CR), and the like. These examples of the rubber component may be used by either a single type or two or more types in combination.

The rubber composition of the present disclosure contains N-cyclohexyl-2-benzothiazolylsulfenamide. N-cyclohexyl-2-benzothiazolylsulfenamide not only facilitates a vulcanizing reaction but also decreases the loss tangent (tanδ) of the rubber composition, thereby contributing to improving the low exothermic property of the rubber composition.

In the rubber composition of the present disclosure, a content of N-cyclohexyl-2-benzothiazolylsulfenamide is preferably ≥ 0.5 parts by mass, more preferably ≥ 0.9 parts by mass, and preferably ≤ 2.2 parts by mass, more preferably ≤ 2.0 parts by mass, with respect to 100 parts by mass of the rubber component. When the content of N-cyclohexyl-2-benzothiazolylsulfenamide is ≥ 0.5 parts by mass with respect to 100 parts by mass of the rubber component, the vulcanization accelerator CZ can improve the low exothermic property of the rubber composition in a satisfactory manner. The content of N-cyclohexyl-2-benzothiazolylsulfenamide of ≤ 2.2 parts by mass with respect to 100 parts by mass of the rubber component ensures satisfactory adhesion to metal and satisfactory crack resistance of the rubber composition.

N,N-dicyclohexyl-2-benzothiazolylsulfenamide is also known as a vulcanization accelerator capable of achieving good adhesion properties of a rubber composition in this connection. However, N,N-dicyclohexyl-2-benzothiazolylsulfenamide has been designated as a substance to be monitored by the Chemical Substance Control Law and may be subjected to strict restriction in future. In view of reducing a burden on the environment, it is preferable that the rubber composition of the present disclosure contains N,N-dicyclohexyl-2-benzothiazolylsulfenamide by ≤ 2.0 parts by mass and it is more preferable that the rubber composition of the present disclosure contains no N,N-dicyclohexyl-2-benzothiazolylsulfenamide.

The rubber composition of the present disclosure contains a nitrogenous cyclic compound having no benzene ring. The nitrogenous cyclic compound contributes to suppressing deterioration in adhesion to metal and crack resistance of the rubber composition.

The nitrogenous cyclic compound in the rubber composition of the present disclosure, although of which type is not particularly restricted as long as the compound has no benzene ring and includes nitrogen atom and a cyclic structure therein, preferably lacks a mercapto group. When the nitrogenous cyclic compound has neither benzene ring nor mercapto group, such a nitrogenous cyclic compound added to the rubber composition adequately controls formation of a rubber-metal adhesion layer or the like and thus protects a surface of a metal material, thereby preventing excessive formation of the rubber-metal adhesion layer, so as to significantly enhance the adhesion force between the rubber composition and the metal material and achieve excellent initial adhesion and excellent adhesion after being left for a long period of time therebetween without adversely affecting a vulcanization process.

In the rubber composition of the present disclosure, the nitrogenous cyclic compound having no benzene ring is preferably triazole, a triazole derivative, imidazole, or an imidazole derivative, and more preferably triazole or a triazole derivative in terms of reducing production cost and improving adhesion of the rubber composition to metal. These examples of the nitrogenous cyclic compound may be used by either a single type or two or more types in combination.

Each of the triazole derivative and the imidazole derivative is preferably a compound having a C₁₋₃ alkyl, a C₁₋₃ aminoalkyl, or an amino group in a side chain thereof. Examples of the C₁₋₃ alkyl group include methyl, ethyl, propyl group and examples of the C₁₋₃ aminoalkyl group include aminomethyl, aminoethyl, aminopropyl group.
When each of the triazole derivative and the imidazole derivative is a compound having a C₁₋₃ alkyl, a C₁₋₃ aminoalkyl, or an amino group in a side chain of the triazole/imidazole ring thereof, such a triazole/imidazole derivative, not exhibiting too much compatibility with the rubber component, protects a surface of a metal material in a satisfactory manner, thereby preventing excessive formation of a rubber-metal adhesion layer, so as to significantly enhance the adhesion force between the rubber composition and the metal material and achieve excellent initial adhesion and excellent adhesion after being left for a long period of time therebetween without adversely affecting a vulcanization process.

Examples of triazole and the triazole derivative described above include 1,2,3-triazole, 1,2,4-triazole, 3-amino-1,2,4-triazole, 4-amino-1,2,4-triazole, 1-methyl-1,2,3-triazole, 2-methyl-1,2,3-triazole, 4-methyl-1,2,3-triazole, 4,5-dimethyl-1,2,3-triazole, 1-methyl-1,2,4-triazole, 3-methyl-1,2,4-triazole, 3,5-dimethyl-1,2,4-triazole, 3,5-diethyl-1,2,4-triazole, and the like. These examples of triazole and the triazole derivative may be used by either a single type or two or more types in combination.

Examples of imidazole and the imidazole derivative described above include imidazole, 2-aminoimidazole, 4-aminoimidazole, 5-aminoimidazole, 2-methylimidazole, 2-ethylimidazole, 2-methyl-4-ethylimidazole, and the like. These examples of imidazole and the imidazole derivative may be used by either a single type or two or more types in combination.

In the rubber composition of the present disclosure, the nitrogenous cyclic compound having no benzene ring is preferably 1,2,3-triazole, 1,2,4-triazole, 3-amino-1,2,4-triazole, 4-amino-1,2,4-triazole, or imidazole in terms of improving adhesion of the rubber composition to metal.
The nitrogenous cyclic compound may be either a commercially available product or synthesized by a known method, for use.

A content of the nitrogenous cyclic compound is to be ≤ 0.4 parts by mass, preferably ≤ 0.3 parts by mass, and preferably ≥ 0.01 parts by mass, more preferably ≥ 0.05 parts by mass, with respect to 100 parts by mass of the rubber component. A content of the nitrogenous cyclic compound of ≤ 0.4 parts by mass with respect to 100 parts by mass of the rubber component ensures satisfactory initial adhesion of the rubber composition to metal, the content of the nitrogenous cyclic compound of ≤ 0.3 parts by mass further improves the low exothermic property of the rubber composition, and the content of the nitrogenous cyclic compound of ≥ 0.01 parts by mass further improves adhesion of the rubber composition to metal.

The rubber composition of the present disclosure contains a cobalt compound containing no boron. The cobalt compound contributes to suppressing deterioration in adhesion to metal and crack resistance of the rubber composition.

The cobalt compound is preferably a cobalt salt of aliphatic acid in terms of achieving good overall balance between satisfactory low exothermic property and satisfactory durability in adhesion to metal and crack resistance of the rubber composition. The cobalt salt of aliphatic acid may be in any of saturated, unsaturated, normal or branched state and examples thereof include cobalt (II) stearate, cobalt versatate, cobalt oleate, cobalt linoleate, cobalt linolenate, cobalt abietate, cobalt caprylate, cobalt 2-ethylhexanoate, cobalt octylate, cobalt pivalate, cobalt n-heptanoate, cobalt 2,2-dimethylpentanoate, cobalt 2-ethylpentanoate, cobalt 4,4-dimethylpentanoate, cobalt n-octanoate, cobalt 2,2-dimethylhexanoate, cobalt 2-ethylhexanoate, cobalt 4,4-dimethylhexanoate, cobalt 2,4,4-trimethylpentanoate, cobalt n-nonanoate, cobalt 2,2-dimethylheptanoate, cobalt 6,6-dimethylheptanoate, cobalt 3,5,5-trimethylhexanoate, cobalt n-decanoate, cobalt 2,2-dimethyloctanoate, cobalt 7,7-dimethyloctanoate, cobalt n-undecanoate, and the like. Cobalt stearate is particularly preferable among these examples in terms of achieving good overall balance between satisfactory low exothermic property and satisfactory durability in adhesion to metal, crack resistance and the like of the rubber composition.

In this regard, a cobalt compound having boron cannot achieve satisfactory low exothermic property and satisfactory durability in adhesion to metal and crack resistance of the rubber composition in a highly compatible manner.

A content of the cobalt compound is preferably ≥ 0.9 parts by mass, more preferably ≥ 1.2 parts by mass, and preferably ≤ 2.2 parts by mass, more preferably ≤ 2.0 parts by mass, with respect to 100 parts by mass of the rubber component. A content of the cobalt compound of ≥ 0.9 parts by mass with respect to 100 parts by mass of the rubber component ensures satisfactory adhesion of the rubber composition to metal and the content of the cobalt compound, of ≤ 2.2 parts by mass ensures satisfactory aging resistance of the rubber composition.

A mass ratio (Co/N) of the cobalt content (Co) in the cobalt compound with respect to the nitrogen content (N) in the nitrogenous cyclic compound is to be in the range of 1.2 to 7.0 and preferably in the range of 1.8 to 6.0 in the rubber composition of the present disclosure. When a mass ratio (Co/N) of the cobalt content (Co) in the cobalt compound with respect to the nitrogen content (N) in the nitrogenous cyclic compound is less than 1.2, i.e. when the ratio of cobalt is too small, adhesion of the rubber composition to metal deteriorates. When the mass ratio (Co/N) exceeds 7.0, i.e. when the ratio of cobalt is too large, aging resistance of the robber composition deteriorates.

The rubber composition of the present disclosure contains silica. The silica contributes to suppressing deterioration of crack resistance and improving the low exothermic property of the rubber composition.
Type of the silica is not particularly restricted and examples thereof include wet silica (hydrated silica), dry silica (anhydrous silica), calcium silicate, aluminum silicate, and the like. Wet silica is preferable among these examples. These examples of the silica may be used by either a single type or two or more types in combination.
A BET specific surface area of the silica is preferably in the range of 40 to 350 m²/g, more preferably in the range of 150 to 300 m²/g, and further more preferably in the range of 200 to 250 m²/g. The silica having a BET specific surface area within the aforementioned ranges is advantageous because it can achieve satisfactory rubber reinforcing property and satisfactory dispersibility to the rubber component in a compatible manner.
A content of the silica is preferably ≥ 3 parts by mass, more preferably ≥ 5 parts by mass, and preferably ≤ 30 parts by mass, more preferably ≤ 15 parts by mass, with respect to 100 parts by mass of the rubber component. A content of the silica of ≥ 3 parts by mass with respect to 100 parts by mass of the rubber component further improves the low exothermic property of the rubber composition and the content of the silica, of ≤ 30 parts by mass, ensures satisfactory workability of the rubber composition.

It is preferable that the rubber composition of the present disclosure further contains carbon black. Durability such as crack resistance of the rubber composition improves when the rubber composition contains carbon black.
Type of the carbon black is not particularly restricted and examples thereof include carbon blacks of GPF, FEF, HAF, ISAF and SAF grades. These examples of the carbon black may be used by either a single type or two or more types in combination.
A content of the carbon black is preferably ≥ 20 parts by mass, more preferably ≥ 30 parts by mass, and preferably ≤ 100 parts by mass, more preferably ≤ 80 parts by mass, with respect to 100 parts by mass of the rubber component. A content of the carbon black of ≥ 20 parts by mass with respect to 100 parts by mass of the rubber component further improves durability such as crack resistance of the rubber composition and the content of the carbon black, of ≤ 100 parts by mass, ensures satisfactory workability of the rubber composition.

A total content of the silica and the carbon black is preferably ≥ 30 parts by mass, more preferably ≥ 40 parts by mass, and preferably ≤ 120 parts by mass, more preferably ≤ 100 parts by mass, with respect to 100 parts by mass of the rubber component in the rubber composition of the present disclosure. A total content of the silica and the carbon black of ≥ 30 parts by mass with respect to 100 parts by mass of the rubber component further improves durability such as crack resistance of the rubber composition and the total content of the silica and the carbon black, of ≤ 120 parts by mass, ensures satisfactory workability of the rubber composition.

It is preferable that the rubber composition of the present disclosure further contains a vulcanizing agent. Examples of the vulcanizing agent include sulfur and the like.
A content of the vulcanizing agent, calculated as a content of sulfur, is preferably in the range of 0.1 to 10 parts by mass and more preferably in the range of 1 to 4 parts by mass with respect to 100 parts by mass of the rubber component. A content of the vulcanizing agent, calculated as a content of sulfur, of ≥ 0.1 parts by mass with respect to 100 parts by mass of the rubber component further improves durability such as crack resistance of the rubber composition and the content of the vulcanizing agent, of ≤ 10 parts by mass, ensures satisfactory rubber elasticity of the rubber composition.

It is acceptable to optionally select and add an antioxidant, a softening agent, a silane coupling agent, stearic acid, zinc white (zinc oxide) and the like, in addition to the rubber component, N-cyclohexyl-2-benzothiazolylsulfenamide (the vulcanization accelerator CZ), the nitrogenous cyclic compound having no benzene ring, the cobalt compound containing no boron, silica, carbon black, and the vulcanizing agent described above, to the rubber composition of the present disclosure unless addition of the optional additives adversely affects the object of the present disclosure. Commercially available products can be suitably used as the optional additives in this regard. The rubber composition of the present disclosure can be manufactured by the conventionally known method. For example, the rubber composition of the present disclosure can be manufactured by: blending a rubber component with N-cyclohexyl-2-benzothiazolylsulfenamide, a nitrogenous cyclic compound having no benzene ring, a cobalt compound containing no boron, silica, and additives of various types optionally selected according to necessity; and subjecting the blend to mixing and kneading, warming, extrusion and the like.

### < metal-rubber composite >

A metal-rubber composite of the present disclosure is characterized in that it has the aforementioned rubber composition and a metal. The metal-rubber composite of the present disclosure, having the rubber composition, can possess satisfactory durability and satisfactory low exothermic property in a compatible manner.

Specific examples of the metal-rubber composite include a composite obtained by embedding a metal material in the rubber composition. Examples of the metal material include linear, plate-like, or chain-like materials made of metals such as steel, iron, stainless, lead, aluminum, copper, brass, bronze, Monel alloy, nickel, zinc, and the like. A steel cord is particularly preferable as the metal material. A diameter of the steel cord is appropriately selected in accordance with an application thereof.
The metal material may be provided with a plating layer on a surface thereof. Examples of the plating layer include a brass-plating layer, a zinc-plating layer, a copper-plating layer, and the like. A brass-plating layer is preferable among these examples in terms of achieving both satisfactory initial adhesion and satisfactory adhesion after being left for a long period of time thereof, to rubber (coating rubber). A mass ratio of copper with respect to zinc in the brass-plating layer is preferably in the range of 60: 40 to 70: 30.

The metal-rubber composite of the present disclosure can be manufactured, for example, by a process of attaching the aforementioned metal material, which may optionally be provided with a plating, to the aforementioned rubber composition by a conventionally known method.
Examples of the method for attaching the metal material to the rubber composition include a method of vulcanization-bonding the metal material to the rubber composition under a hot pressing condition.

The metal-rubber composite of the present disclosure is applicable to various types of rubber products such as a conveyor belt, a rubber crawler and a hose, as well as a tire described below.

### < Tire >

A tire of the present disclosure is characterized in that it uses the aforementioned metal-rubber composite. The tire of the present disclosure, using the metal-rubber composite, can possess satisfactory durability and satisfactory low exothermic property in a compatible manner. Examples of tire portions to which the metal-rubber composite is applicable include a belt, a carcass, a bead core, and the like of a tire.

The tire of the present disclosure may be obtained by, depending on the type of a tire to which the present disclosure is applied, either i) building a green tire by using the rubber composition and the metal-rubber composite in an unvulcanized state and subjecting the green tire to vulcanization or ii) building a green tire by using a semi-crosslinked rubber composition (semi-vulcanized rubber) which has been subjected to a preliminary vulcanization process, as well as the rubber composition and the metal-rubber composite in an unvulcanized state, and subjecting the green tire to a main vulcanization process. The tire of the present disclosure is preferably a pneumatic tire. Examples of gas with which the tire is to be inflated include inert gas such as nitrogen, argon, helium or the like, as well as ambient air and air of which oxygen partial pressure has been adjusted.

### EXAMPLES

The present disclosure will be described further in detail by Examples hereinafter. The present disclosure is not limited by any means to these Examples.

Rubber composition samples were prepared by using a conventional Banbury mixer according to the blending formulations shown in Table 1. Crack resistance, low exothermic property, and adhesion property were evaluated for each of the rubber composition samples thus obtained, by the following methods. The results are shown in Table 1.

### (1) Crack resistance

Crack resistance was determined by: subjecting the rubber composition samples to vulcanization at 145 °C for 40 minutes, respectively, thereby obtaining vulcanized rubber samples; preparing a sample sheet (2 mm × 50 mm × 6 mm) for a rupture test from each of the vulcanized rubber samples thus obtained; forming a very small hole as an initial crack at the center of the sample sheet; applying stress of 2.0 MPa repeatedly to the sample sheet in the long side direction thereof under the conditions of frequency: 6 Hz, the temperature of ambient air temperature: 80 °C; counting the number of applying the stress to the sample sheet before the sample sheet as a rupture test piece broke; calculating the common logarithm of the number thus counted; carrying out the aforementioned rupture test four times for each vulcanized rubber sample, thereby obtaining four common logarithm values; calculating the average of the four common logarithm values, thereby obtaining "the average common logarithm" of the vulcanized rubber sample; and converting the average common logarithm of the vulcanized rubber sample to an index value relative to the average common logarithm of Comparative Example 1 being "100", for evaluation.

The larger index value represents the higher crack resistance (resistance to crack growth).

### (2) Low exothermic property

Low exothermic property was determined by: subjecting the rubber composition samples to vulcanization at 145 °C for 40 minutes, respectively, thereby obtaining vulcanized rubber samples; measuring a loss tangent (tanδ) of each of the vulcanized rubber samples thus obtained by using a spectrometer (manufactured by Ueshima Sesakusho Co., Ltd.) under the conditions of temperature: 24 °C, strain: 1 %, and frequency: 52 Hz; and converting the tanδ of the vulcanized rubber sample thus measured to an index value relative to the tanδ of Comparative Example 1 being "100", for evaluation. The smaller index value represents the better low exothermic property.

### (3) Adhesion property

### < Preparation of metal material >

A steel cord having (1 × 3) structure was prepared as a metal material by twisting steel wires provided with brass plating (the mass ratio of copper/zinc in the plating layer = 63/37, thickness of the plating layer: 0.2 µm, wire diameter: 0.3 mm).

### < Evaluation of initial adhesion >

First, each metal-rubber composite sample was obtained by: placing the steel cords in parallel to each other at 12.5 mm intervals therebetween; vertically sandwiching the steel cords between two sheets of the rubber composition; and subjecting the structure to vulcanization at 160 °C for 7 minutes, so that the rubber composition sheets were attached to the steel cords, thereby obtaining a metal-rubber composite sample in which the steel cords were embedded in a rubber sheet having thickness of 1 mm (the steel cords were embedded in the rubber sheet at the center in the thickness direction and beneath the surfaces of the rubber sheet at 12.5 mm intervals therebetween).

Then, initial adhesion in the metal-rubber composite sample was analyzed by: pulling the steel cords out of the sample immediately after the vulcanization according to ASTM D 2229; determining a coating ratio (0 % to 100 %) of the rubber attaching to the steel cords by visual observation; and classifying the coating ratio thus determined into one of the following categories, based on the coating ratio of the rubber in Comparative Example 1 as the reference.
A: Coating ratio of rubber was ≥ 80 % of that of Comparative Example 1
B: Coating ratio of rubber was ≥ 60 % and < 80 % of that of Comparative Example 1
C: Coating ratio of rubber was ≥ 40 % and < 60 % of that of Comparative Example 1
D: Coating ratio of rubber was < 40 % of that of Comparative Example 1

### < Evaluation of adhesion after being left for a long period of time >

First, each metal-rubber composite sample was obtained by: placing the steel cords in parallel to each other at 12.5 mm intervals therebetween; vertically sandwiching the steel cords between two sheets of the rubber composition, thereby obtaining a sample to be treated; leaving the sample to be treated, in an air atmosphere of temperature: 45 °C, relative humidity: 85 %, for 7 days; then subjecting the sample to vulcanization at 160 °C for 20 minutes, thereby obtaining a metal-rubber composite sample in which the steel cords were embedded in a rubber sheet having thickness of 1 mm (the steel cords were embedded in the rubber sheet at the center in the thickness direction and beneath the surfaces of the rubber sheet at 12.5 mm intervals therebetween).

Then, adhesion after being left for a long period of time of the metal-rubber composite sample was analyzed by: pulling the steel cords out of the metal-rubber composite sample thus obtained; determining a coating ratio (0 % to 100 %) of the rubber attaching to the steel cords by visual observation; and classifying the coating ratio thus determined into one of the following categories, based on the coating ratio of the rubber in Comparative Example 1 as the reference.
A: Coating ratio of rubber was ≥ 80 % of that of Comparative Example 1
B: Coating ratio of rubber was ≥ 60 % and < 80 % of that of Comparative Example 1
C: Coating ratio of rubber was ≥ 40 % and < 60 % of that of Comparative Example 1
D: Coating ratio of rubber was < 40 % of that of Comparative Example 1

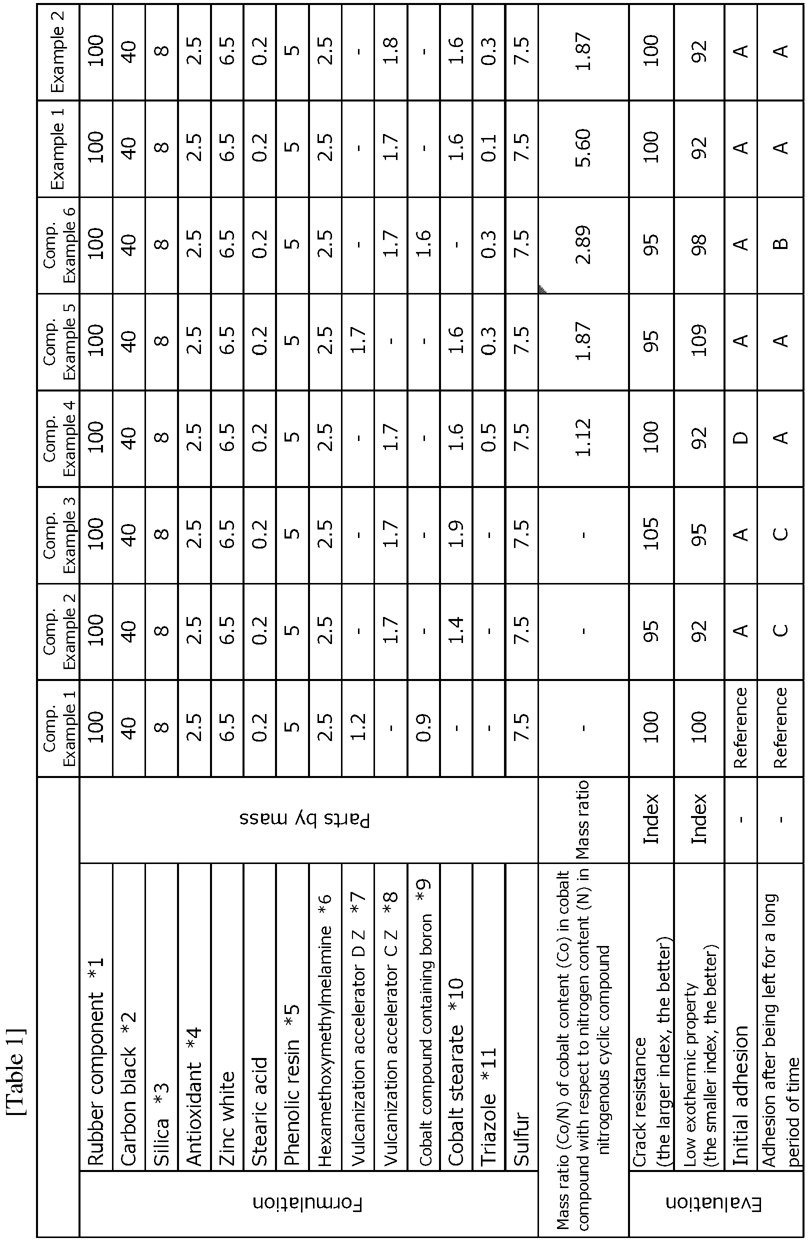

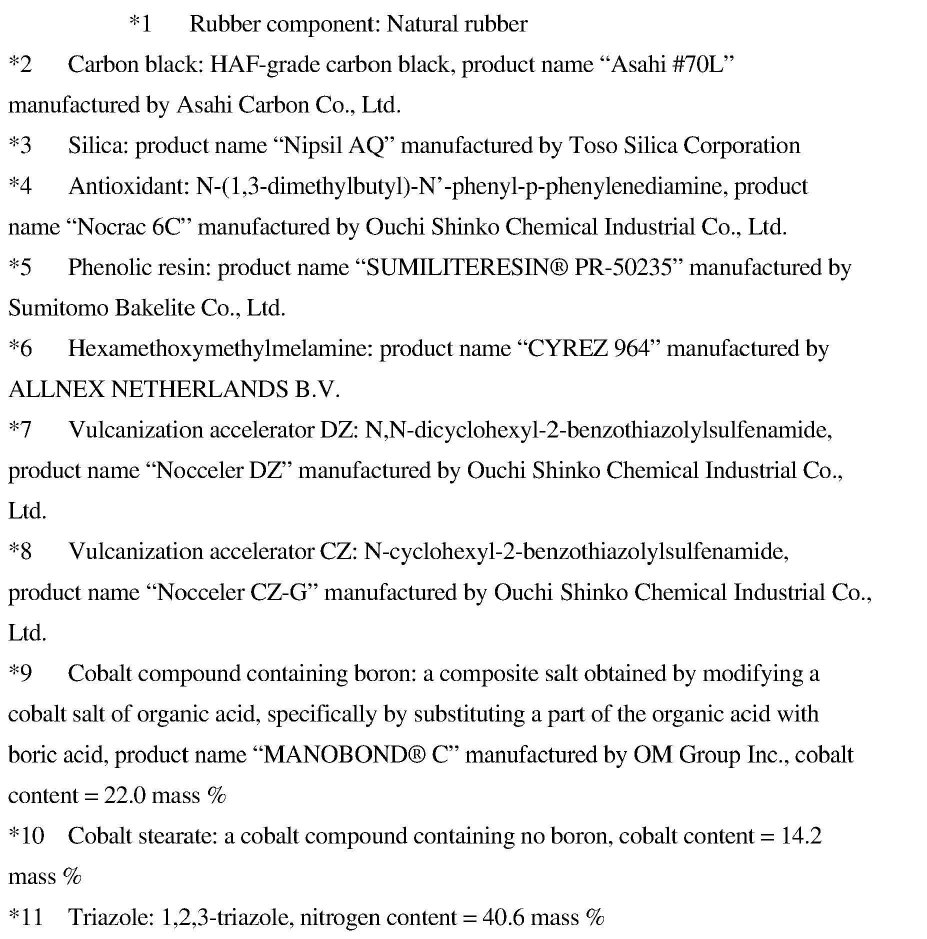

It is understood from Table 1 that the rubber composition of the present disclosure is excellent in crack resistance, low exothermic property, initial adhesion, and adhesion after being left for a long period of time.

### INDUSTRIAL APPLICABILITY

The rubber composition and the metal-rubber composite of the present disclosure is applicable to various rubber products such as a conveyor belt, a rubber crawler and a hose, as well as a tire.

## Claims

1. A rubber composition, wherein it comprises: a rubber component; N-cyclohexyl-2-benzothiazolylsulfenamide; a nitrogenous cyclic compound having no benzene ring; a cobalt compound containing no boron; and silica,
wherein a content of the nitrogenous cyclic compound is 0.4 parts by mass or less with respect to 100 parts by mass of the rubber component, and
a mass ratio (Co/N) of the cobalt content (Co) in the cobalt compound with respect to the nitrogen content (N) in the nitrogenous cyclic compound is in the range of 1.2 to 7.0.

2. The rubber composition of claim 1, wherein the nitrogenous cyclic compound is selected from the group consisting of triazole, a triazole derivative, imidazole, and an imidazole derivative.

3. The rubber composition of claim 2, wherein each of the triazole derivative and the imidazole derivative has a C₁₋₃ alkyl, a C₁₋₃ aminoalkyl, or an amino group in a side chain thereof.

4. The rubber composition of any of claims 1 to 3, wherein the nitrogenous cyclic compound is selected from the group consisting of 1,2,3-triazole, 1,2,4-triazole, 3-amino-1,2,4-triazole, 4-amino-1,2,4-triazole, and imidazole.

5. The rubber composition of any of claims 1 to 4, wherein the cobalt compound is cobalt (II) stearate.

6. The rubber composition of any of claims 1 to 5, wherein the rubber composition contains no N,N-dicyclohexyl-2-benzothiazolylsulfenamide.

7. A metal-rubber composite, wherein it has the rubber composition of any of claims 1 to 6 and a metal.

8. A tire, wherein it uses the metal-rubber composite of claim 7.
